# EUROPÄISCHE PATENTSCHRIFT

(11) **EP 2 986 189 B1**
(45) Veröffentlichungstag und Bekanntmachung des Hinweises auf die Patenterteilung: **25.10.2017**
(21) Anmeldenummer: 14726071.5
(22) Anmeldetag: 15.04.2014
(51) Int. Cl.: A47J 37/07

(54) **GRILLVORRICHTUNG, INSBESONDERE KUGELGRILL**
GRILLING DEVICE, IN PARTICULAR BOWL GRILL
BARBECUE, NOTAMMENT BARBECUE SPHÉRIQUE

(30) Priorität: 16.04.2013 DE 202013003540 U
(43) Veröffentlichungstag der Anmeldung: 24.02.2016
(73) Patentinhaber: Kaiser, Thomas, 87463 Schrattenbach (DE); Wassermann, Christian, 87647 Kraftisried (DE)
(72) Erfinder: Kaiser, Thomas, 87463 Schrattenbach (DE); Wassermann, Christian, 87647 Kraftisried (DE)
(74) Vertreter: Fiener, Josef
(86) Internationale Anmeldenummer: PCT/EP2014/000999
(87) Internationale Veröffentlichungsnummer: WO 2014/170008

(56) Entgegenhaltungen:
- US-A- 2 950 712
- US-A- 4 630 593
- US-A1- 2006 096 585
- US-A1- 2011 203 567
- US-A1- 2011 203 568

## Beschreibung

Die Erfindung betrifft eine Grillvorrichtung, insbesondere einen Kugelgrill gemäss dem Oberbegriff des Anspruches 1.

Derartige Grillvorrichtungen sind weit verbreitet, insbesondere als Kugelgrill zum Grillen von Nahrungsmitteln über einer Heizquelle, vorzugsweise glühender Holzkohle oder Grill-Briketts. Für das Grillgut ist die einstellbare Entfernung von der Holzkohle von besonderer Bedeutung. Ist das Grillgut zu weit entfernt, wird dieses nicht ausreichend gegart. Andererseits kann es bei zu geringem Abstand zum Ankohlen des Grillgutes kommen, wodurch dieses ungenießbar wird. Um den Abstand zwischen Grillgut und Heizquelle variabel zu verändern, weisen herkömmliche Grillgeräte oft versetzte Schlitze auf, in die der Grillrost entsprechend eingehängt oder eingesteckt wird. Nachteilig ist hierbei, dass die Mantelfläche offen bleiben muss, so dass die Grillvorrichtung einen nur unzureichenden Zug aufweist und daher wenig effizient betrieben werden kann. Zudem besteht eine Kippgefahr für den Grillrost, wenn dieser zur Abstandsveränderung aus den Schlitzen entfernt wird, um dann in höher oder tiefer gelegene Schlitze eingeführt zu werden. Dies ist mühsam und meist nur mit Handschuhen durchführbar, wobei das Risiko besteht, dass die Bedienperson den Grillrost fallen lässt oder sich daran verbrennt.

In der DE 197 17 450 wird eine Grillvorrichtung beschrieben, bei welcher der Abstand zwischen Heizquelle (beispielsweise Holzkohlen, Gasbrenner oder elektrische Heizspirale) und Grillrost veränderbar ist, indem ein Windschirm mit der Heizebene drehbeweglich ist. Dies ist auf einen Kugelgrill kaum und bei einem Grill in liegender Zylinderform überhaupt nicht anwendbar. Zudem bildet die hierbei notwendige, relativ weit nach außen ragende Handhabe am Grillrost eine Unfallgefahr, z. B. für Verbrennungen, da der Grillrost hohe Temperaturen aufweisen kann. Zudem ist die Einstellung des Abstandes zwischen Grillgut und Heizmittel mit einem relativ großen Aufwand verbunden. Gleiches gilt für Grills mit abnehmbaren Hauben, so dass die Bedienung unpraktisch und ggf. gefährlich sein kann. Die Druckschrift US 2011/0203567 A1 offenbart eine Grillvorrichtung mit einer Unterschale, in der eine Heizebene und ein Grillrost angeordnet sind, wobei der vertikale Abstand zwischen Grillrost und Heizebene variabel ist und der Abstand zwischen Grillrost und Heizebene über ein Koppelgetriebe verstellbar ist, das innerhalb der Unterschale angeordnet ist. Aufgabe der vorliegenden Erfindung ist es daher, die oben genannten Nachteile bekannter Grillvorrichtungen zu überwinden und einen Grill zur Verfügung zu stellen, der eine variable Hitzeregulierung auf komfortable und sichere Weise ermöglicht. Zudem soll eine praktische Bedienung mit guter Luftzufuhr sichergestellt werden.

Die Lösung dieser Aufgabe erfolgt bei einer Grillvorrichtung mit den Merkmalen des Anspruchs 1. Bevorzugte Ausführungen sind Gegenstand der Unteransprüche. Die erfindungsgemäße Grillvorrichtung, insbesondere in Form eines Kugelgrills, wobei der vertikale Abstand zwischen Grillrost und Heizebene variabel ist, weist hierzu eine Unterschale auf, die bevorzugt am Gestell um eine Horizontalachse schwenkbar gelagert ist, wobei der Abstand zwischen Grillrost und Heizebene über ein Koppelgetriebe verstellbar ist. Das Koppelgetriebe (auch als ebenes Getriebe bezeichnet) weist bevorzugt ein Koppelgestänge auf, insbesondere in Parallelogramm- oder Scherenform, das innerhalb der Unterschale in platzsparender Weise eingebaut werden kann. Ein Gestängeteil kann hierbei auch in einer Kulisse geführt sein.

Bevorzugt ist wenigstens eine Luftöffnung im Bodenbereich der Unterschale vorgesehen, insbesondere in Schlitzform, die sich in einer bei einem Kugelgrill vorgesehenen Oberschale fortsetzen kann. Die Horizontalachse zur Verschwenkung der Unterschale wird bevorzugt durch zwei Lageraugen am Gestell gebildet, das in der Ausführung als Tischgrill auch relativ niedrig ausgeführt sein kann. An diesen Lageraugen kann auch die Unterschale und Oberschale geklemmt und fixiert sein, wobei die Schwenkbewegung insbesondere unter Beaufschlagung eines Federpakets erfolgt, so dass die Unter- und Oberschale in jeder Schwenkposition sicher gehalten wird. Mit der Höhenverstellung der Heizebene wird zugleich die Luftzufuhr reguliert, so dass sich insgesamt eine komfortable und sichere Hitzeregulierung in allen Positionen (offen, halboffen, geschlossen) ergibt.

Als Heizquelle der Grillvorrichtung wird insbesondere Holzkohle verwendet, wobei unter der Heizebene eine etwa flächengleiche Aschenmulde angeordnet ist. Diese ist bevorzugt aus der Unterschale herausnehmbar und unter der Heizebene schubladenartig geführt, so dass die Entsorgung der Asche besonders einfach möglich ist. An der Grillvorrichtung kann zur Vorbereitung der Speisen seitlich ein Ablagebrett einhängt werden, wozu das Lagerauge dienen kann. Selbstverständlich ist die Anbringung solcher Ablagen an beiden Seiten bzw. Lageraugen des Grillgeräts möglich.

Das Koppelgetriebe kann in einfacher Weise an den Lageraugen zentral fixiert werden, insbesondere mit einer Schraube an der Schwenkachse, so dass eine einfache und platzsparende Montage erzielt wird. Zur einfachen Inbetriebnahme der Grillvorrichtung wird zudem vorgeschlagen, einen sog. Anzündkamin zum Anheizen auf die Heizebene zu stellen. Hierdurch lassen sich die Brennbedingungen im Zusammenwirken mit der Luftöffnung verbessern, ohne dass Brennstoffe herausfallen können. Somit wird die Betriebssicherheit der Grillvorrichtung insgesamt erhöht, da hierbei ein umschlossener Brennraum gebildet wird, in dem optimale Luftströmungen herrschen. Dies gilt durch die geschwungene Form der inneren Bauteile auch für den Grillbetrieb, so dass das Grillgut direkt und/oder indirekt erhitzt und so optimal gegart wird.

Nachfolgend werden mehrere bevorzugte Ausführungsbeispiele der erfindungsgemäßen Grillvorrichtung (auch kurz als Kugelgrill bezeichnet) anhand der Zeichnung näher erläutert. Hierbei zeigen:
Fig. 1 einer Grillvorrichtung in geschlossener, perspektivischer Darstellung,
Fig. 2 eine Perspektivansicht mit geöffneter Oberschale der Grillvorrichtung.
Fig. 3 eine Teilansicht einer zur Grillvorrichtung passenden Ablage gemäss Fig. 2,
Fig. 4 eine Detailansicht eines Lagerauges der Grillvorrichtung,
Fig. 5 eine Ansicht in die Grillvorrichtung hinein (ohne Grillrost),
Fig. 6 eine Perspektivansicht der Innenteile (ohne Unter- und Oberschale),
Fig. 7 eine Perspektivansicht mit einem Anzündkamin,
Fig. 8 eine Seiten-Schnittansicht mit einer Aschenmulde,
Fig. 9 eine ähnliche Ansicht wie in Fig. 8, jedoch ohne Heiz- und Aschenmulde,
Fig. 10 eine Detailansicht des Aufbaus eines Lagerauges,
Fig. 11 zwei Ansichten mit angehobener bzw. abgesenkter Heizebene; und
Fig. 12 entsprechende Ansichten wie in Fig. 11, jedoch mit einem Scherengestänge.

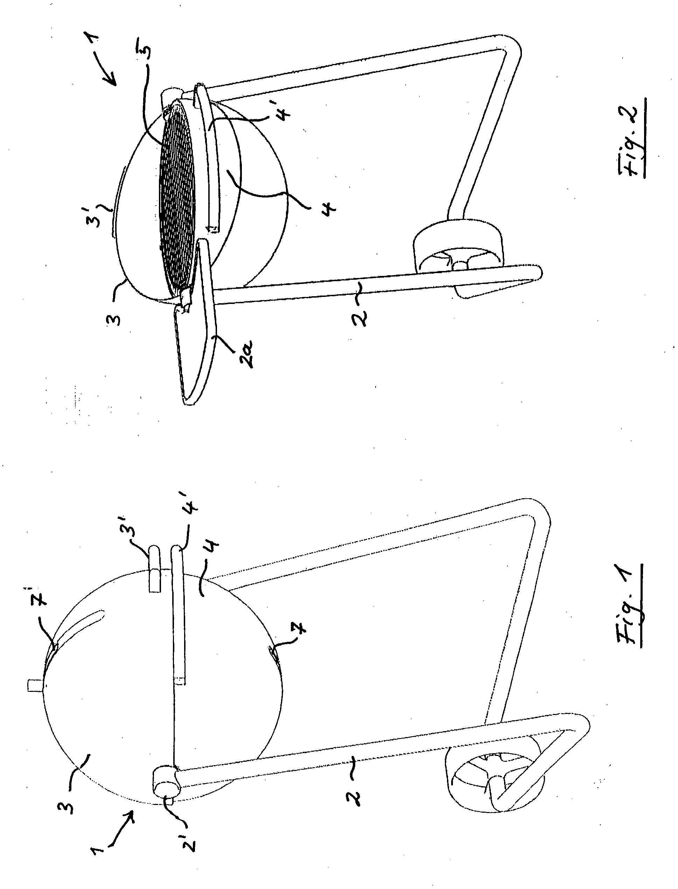

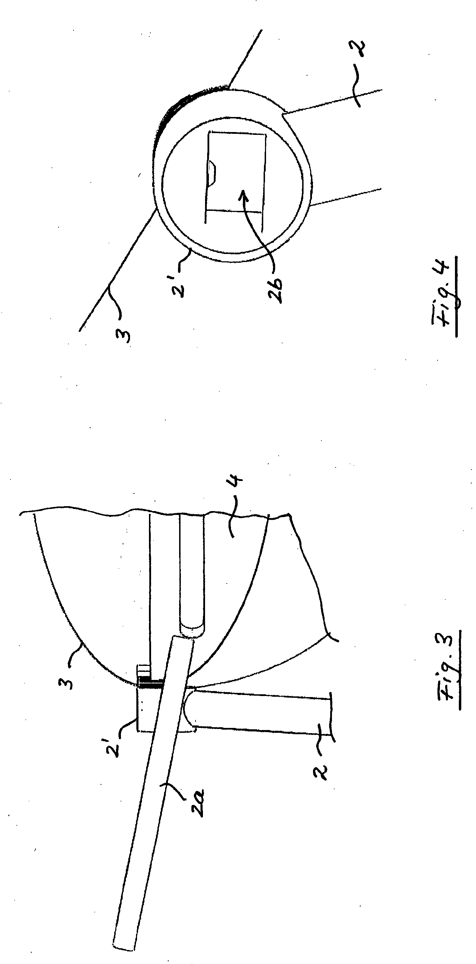

Bei der dargestellten Grillvorrichtung 1 handelt es sich um einen sog. Kugelgrill, der zur bequemen Bedienung ein Gestell 2 aufweist, wobei hier zum einfachen Transport im Garten oder auf der Terrasse auch ein Rad integriert ist. Beim Betrieb im Freien wird als Brennstoff bevorzugt Holzkohle eingesetzt. Der Kugelgrill 1 weist als Deckel (auch Wetter- und Windschutz) eine Oberschale 3 und ein Unterteil 4 auf, das die Heizquelle sicher umschließt. Bevorzugt sind die Oberschale 3 und die Unterschale 4 jeweils als Kugelhälften ausgeformt. Der Kugelgrill kann sowohl mit geöffnetem Gehäuse, wie in Fig. 2 gezeigt, betrieben werden, als auch mit geschlossenem Gehäuse, wie in Fig. 1 gezeigt, sowie in allen Zwischenstellungen. Dies wird insbesondere zum Garen von Fleisch angewendet, das relativ lange Garzeiten benötigt. Zur Verschwenkung der Oberschale 3 (um die von Lageraugen 2' gebildete Horizontalachse) ist ein Griff 3' vorgesehen, ebenso für die Unterschale 4 ein breiter Handgriff 4'. Im geschlossenen Zustand strömt Luft durch entsprechende Luftöffnungen 7 ein bzw. aus, wobei diese bevorzugt schlitzförmig geformt sind. Der Griff 3' ist vorzugsweise außermittig angebracht, damit man nicht über die Heizquelle greifen muß. In Fig. 2 ist bei geöffneter Oberschale 3 ein Grillrost 5 für das Grillgut ersichtlich. Dieses kann auf einer seitlichen Ablage 2a (oft auch als Brett bezeichnet) vorbereitet werden. Diese Ablage 2a kann seitlich in das Lagerauge 2' eingesteckt werden, wie in Fig. 3 dargestellt, und in die Horizontalposition verrastet werden. Hierzu ist im Lagerauge 2' eine Öffnung 2b mit einem Haken vorgesehen, wie in Fig. 4 gezeigt:

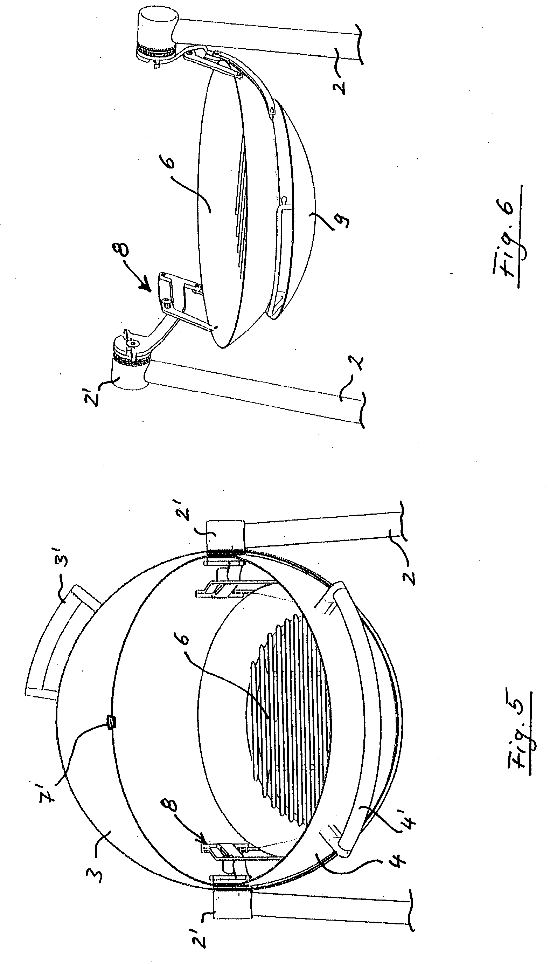

Fig. 5 zeigt eine Ansicht auf eine in der Unterschale 4 angeordnete Heizebene 6, wobei der Grillrost 5 hier abgenommen ist. Zur Verstellung des (vertikalen) Abstands zwischen Grillrost 5 und Heizebene 6 ist ein Koppelgetriebe 8 vorgesehen, das nachfolgend näher beschrieben wird. Das zentral an den Lageraugen 2' befestigte Koppelgetriebe 8 dient hierbei zusammen mit der Verschwenkung der Unterschale 4 um die von den Lageraugen 2' gebildete Horizontalachse dazu, den Abstand zwischen Grillrost 5 und Heizebene 6 zu verstellen. Diese Anordnung ist von Bedeutung, da dies eine besonders stabile Bauweise und sichere Bedienung ermöglicht, wobei es grundsätzlich auch möglich ist, das Koppelgetriebe 8 über einen außerhalb der Unterschale 4 befindlichen Hebel oder Drehknopf zu betätigen.

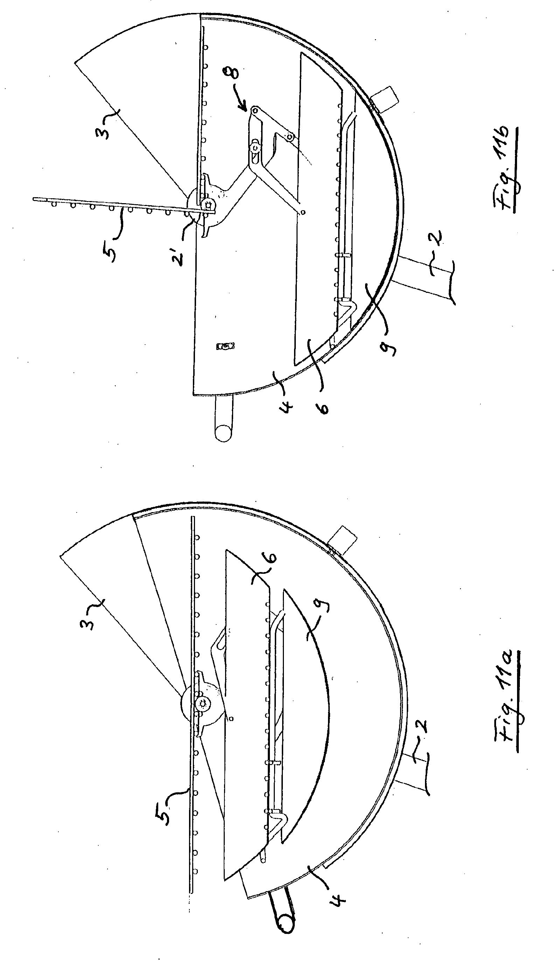

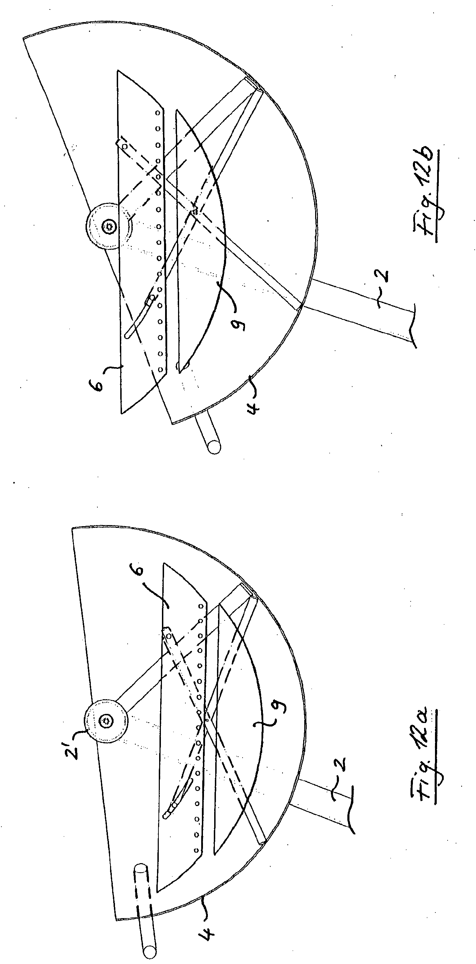

Wie aus Fig. 6 (ohne umgebende Bauteile) ersichtlich, ist das Koppelgetriebe 8 als Gestänge ausgebildet, insbesondere in Parallelogrammform (vgl. auch Fig. 11) oder Scherenform, wie in Fig. 12 in zwei Hubstellungen dargestellt. Das Koppelgetriebe 8 ist hierbei an den Lageraugen 2' angelenkt, ebenso an der Heizebene 6, unter der bei Holzkohlenbetrieb eine Aschenmulde 9 vorgesehen ist.

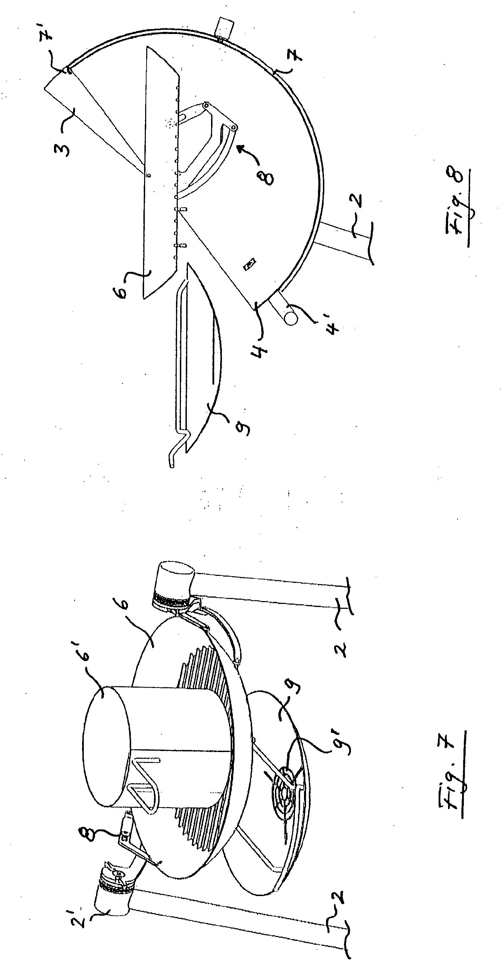

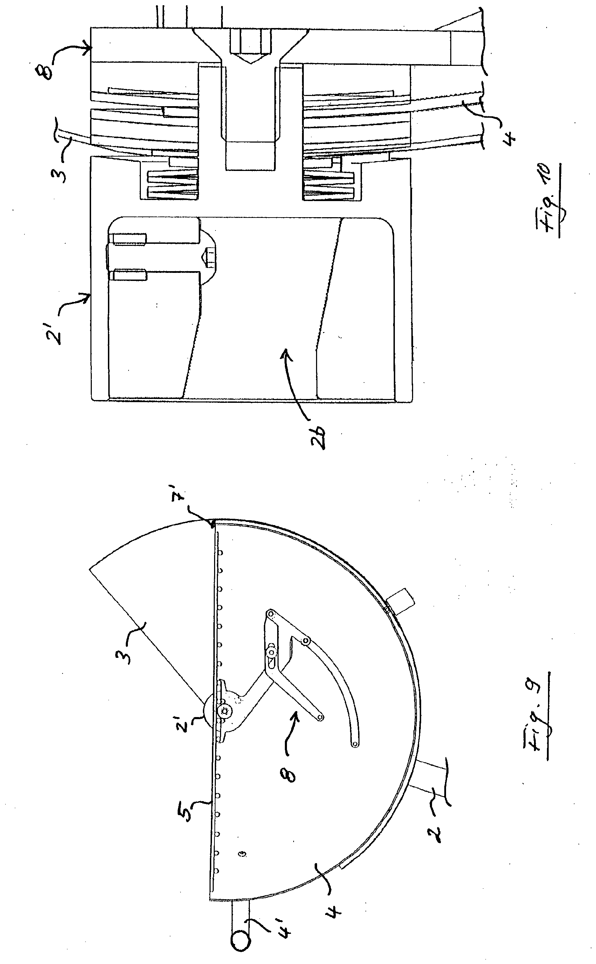

Für diese bevorzugte "Heizquelle" der Grillvorrichtung 1 ist zudem in Fig. 7 ein Anzündkamin 6' für die Heizebene 6 vorgesehen, mit dem die Inbetriebnahme des Kugelgrills wesentlich vereinfacht wird. Der Anzündkamin ist nach unten offen und fördert das Durchglühen der Kohle. Zudem wird die Funkenentwicklung reduziert und dient somit der Sicherheit und komfortablen Bedienung. Dies gilt auch für die Aschenmulde 9, die eine Zündfläche 9' für das Zusammenwirken mit den Anzündkamin 6' aufweist und schubladenartig unter der Heizebene 6 hervorgezogen werden kann, um dann zum Entleerten aus der Unterschale 4 herausgenommen zu werden, wie dies in Fig. 8 dargestellt ist. Dort ist auch die Luftöffnung 7 dargestellt, die mit einem Schieber in Querschnitt veränderbar ist, um den Zug zu regulieren. Der Schieber weist hierbei am oberen Ende einen radial nach innen gerichteten Mitnehmer oder Haken 7' auf, der beim "Klappen" der Oberschale 3 am oberen Rand der Unterschale durch Formschluss hängen bleibt (vgl. auch Fig. 5 bzw. 9) und somit den unteren Luftschlitz offen hält. Durch diese Anordnung der Luftöffnung 7 im Bodenbereich der Unterschale 4 (und der Oberschale 3) wird eine kontinuierliche Durchströmung des Kugelgrills 1 erzielt.

In Fig.9 ist eine Hälfte des Koppelgetriebes 8 ohne angrenzende Bauteile dargestellt. Die freien Enden des Koppelgestänges werden dabei in die Heizebene 6 eingesteckt, so dass diese sicher in Horizontallage höhenverstellbar ist (vgl. insbesondere Fig. 11).

In Fig. 10 ist eines von zwei die Horizontalachse bildenden Lageraugen 2' vergrößert dargestellt. Hierbei werden die Unterschale 4 und die Oberschale 3 geklemmt und sind unter Beaufschlagung eines Federpakets und ggf. eines Reibbelags, so dass die Ober- und Unterschale 3, 4 unabhängig voneinander verschwenkt werden können und in ihrer jeweiligen Verschwenkposition verbleiben. Zudem ist der mittige Teil des Koppelgetriebes 8 am Lagerauge 2' zentral fixiert ist, insbesondere mit einer Innensechskant-Schraube entlang der Schwenkachse.

In Fig. 11 ist in zwei Teilfiguren die Abstandseinstellung zwischen Grillrost 5 und Heizebene 6 verdeutlicht. In Fig. 11 a ist der Abstand relativ gering, während in Fig. 11b der gegenseitige Abstand maximal ist, wobei sich die Heizebene 6 und die Aschenmulde 9 in der tiefsten Position befinden. In dieser Position ist die Unterschale 4 hochgeschwenkt, während in Fig. 11a die Unterschale am Griff 4' um etwa 30° Schwenkwinkel (um die Horizontalachse der Lageraugen 2') heruntergedrückt ist. Dabei wird das Koppelgetriebe 8 mitverschwenkt und in Folge die daran befestigte Heizebene 6 nach oben zum Grillrost 5 hin bewegt, der gemäß Fig. 11b auch geteilt und damit aufstellbar ausgestaltet sein kann. Durch die doppelte Anlenkung an den freien Enden des Koppelgetriebes 8 bleibt die Heizebene 6 immer in Horizontallage.

Dies gilt auch für die alternative Ausführung gemäß Fig. 12, wobei ein Scherengestänge als Koppelgetriebe 8 eingesetzt wird. In Fig. 12a ist hierbei eine abgesenkte Position gezeigt und in Fig. 12b eine angehobene Position, die über die Verschwenkung der Unterschale 4 stufenlos variierbar ist. Hierbei wird die Aschenmulde 9 ebenfalls angehoben oder abgesenkt, wobei diese an die Form des Kugelgrills 1 angepasst ist, Die Aschenmulde 9 kann aus einem dünnwandigen Blech oder hitzebeständigen Werkstoff geformt sein. In der der maximal abgesenkten Position (Fig. 11b) ist die Luftzufuhr zum Inneren des Kugelgrills 1 relativ gering, da dies der geringsten Hitzeanforderung entspricht. Hier jedoch für mehr Hitze am Grillgut die Unterschale 4 nach oben geschwenkt (angehoben), wird die Heizebene 6 und damit die Aschenmulde 9 angehoben, so dass die Luftzufuhr entsprechend verbessert wird und sich eine intuitive Regulierung ergibt

Insgesamt wird somit eine Grillvorrichtung geschaffen, die eine einfache und genaue Einstellung des Abstandes zwischen Grillrost und Heizebene ermöglicht und damit eine schonende und gleichmäßige Garwirkung erzielt. Für besonders empfindliches Grillgut können auf dem hochklappbaren und zum Spülen einfach herausnehmbaren Grillrost 5 auch Keramikscheiben ausgelegt werden. Hierdurch wird das Grillgut nicht direkt durch die Holzkohle erhitzt, sondern die durch die im Kugelgrill 1 aufgestaute Wärmestrahlung (indirektes Grillen). Weiterhin wird die Bedienung erheblich erleichtert, auch durch die Zündfläche 9' in der Aschenmulde 9 und den Anzündkamin 6', der durch die geringe Bauhöhe auch nach dem Grillen im Kugelgrill 1 einfach verstaut werden kann, um so für den nächsten Grillbetrieb bereit zu stehen.

### Bezugszeichenliste :

- 1: Grillvorrichtung
- 2: Gestell; 2' Lagerauge; 2a Ablage
- 3: Oberschale (mit Griff 3')
- 4: Unterschale (mit Griff 4')
- 5: Grillrost
- 6: Heizebene (Kohlerost); 6' Anzündkamin
- 7: Luftöffnung (mit Haken 7' für Luftschieber)
- 8: Koppelgetriebe
- 9: Aschenmulde (mit Zündfläche 9')

## Patentansprüche

1. Grillvorrichtung, insbesondere Kugelgrill, mit einer Unterschale (4), in der eine Heizebene (6) und ein Grillrost (5) angeordnet sind, wobei der vertikale Abstand zwischen Grillrost und Heizebene variabel ist und der Abstand zwischen Grillrost (5) und Heizebene (6) über ein Koppelgetriebe (8) verstellbar ist, das insbesondere innerhalb der Unterschale (4) angeordnet ist, **dadurch gekennzeichnet, dass**
das Koppelgetriebe (8) mit Verschwenkung der Unterschale (4) verstellbar ist.

2. Grillvorrichtung nach Anspruch 1, **dadurch gekennzeichnet, dass**
das Koppelgetriebe (8) als Gestänge ausgebildet ist, insbesondere in Parallelogramm- oder Scherenform.

3. Grillvorrichtung nach Anspruch 1 oder 2, **dadurch gekennzeichnet, dass** wenigstens eine Luftöffnung (7) im Bodenbereich der Unterschale (4) vorgesehen ist, insbesondere in Schlitzform.

4. Grillvorrichtung nach einem der vorstehenden Ansprüche, **dadurch gekennzeichnet, dass** eine Luftöffnung (7), insbesondere in Schlitzform, in einer die Unterschale (4) überdeckenden Oberschale (3) vorgesehen ist, wobei bevorzugt ein Luftschieber mit einem Haken (7') vorgesehen ist, der am oberen Rand der Unterschale (4) anliegt.

5. Grillvorrichtung nach einem der vorstehenden Ansprüche, **dadurch gekennzeichnet, dass** zumindest die Unterschale (4) an einem Gestell (2) schwenkbar gelagert ist, insbesondere in zwei Lageraugen (2') des Gestells (2).

6. Grillvorrichtung nach Anspruch 5, **dadurch gekennzeichnet, dass**
an den Lageraugen (2') die Unterschale (4) und/oder Oberschale (3) geklemmt gelagert ist, insbesondere unter Beaufschlagung eines Federpakets.

7. Grillvorrichtung nach einem der vorstehenden Ansprüche, **dadurch gekennzeichnet, dass** unter der als Kohlerost ausgebildeten Heizebene (6) eine etwa flächengleiche Aschenmulde (9) angeordnet ist.

8. Grillvorrichtung nach einem der vorstehenden Ansprüche, **dadurch gekennzeichnet, dass** die Aschenmulde (9) aus der Unterschale (4) herausnehmbar angeordnet ist.

9. Grillvorrichtung nach Anspruch 7 oder 8, **dadurch gekennzeichnet, dass** die Aschenmulde (9) unter der Heizebene (6) schubladenartig geführt ist und bevorzugt eine Zündfläche (9') aufweist.

10. Grillvorrichtung nach einem der Ansprüche 5 bis 9, **dadurch gekennzeichnet, dass** an wenigstens einem Lagerauge (2') ein Ablagebrett (2a) einhängbar ist.

11. Grillvorrichtung nach einem der Ansprüche 5 bis 10, **dadurch gekennzeichnet, dass** das Koppelgetriebe (8) an den Lageraugen (2') zentral fixiert ist, insbesondere mit einer mittigen Schraube an der Schwenkachse.

12. Grillvorrichtung nach einem der vorstehenden Ansprüche, **dadurch gekennzeichnet, dass** zum Anheizen ein Anzündkamin (6') auf die Heizebene (6) aufstellbar ist.

13. Grillvorrichtung nach einem der vorstehenden Ansprüche, **dadurch gekennzeichnet, dass** das Koppelgetriebe (8) über ein separates Bedienelement zu betätigen ist, insbesondere durch einen Hebel oder Drehknopf außerhalb der Unterschale (4).

## Claims

1. Grilling device, in particular bowl grill, comprising a lower shell (4) in which a heating plane (6) and a grill grate (5) are located, wherein the vertical distance between grill grate and heating plane is variable and the distance between the grill grate (5) and the heating plane (6) is adjustable via a coupling mechanism (8), which is especially arranged inside the lower shell (4), **characterized in that**
the coupling mechanism (8) is adjustable via pivoting of the lower shell (4).

2. Grilling device according to claim 1, **characterized in that**
the coupling mechanism (8) is designed as a linkage, in particular in parallelogram or scissors form.

3. Grilling device according to claim 1 or 2, **characterized in that**
at least one air opening (7) is provided in the bottom region of the lower shell (4), in particular in the form of a slot.

4. Grilling device according to one of the preceding claims, **characterized in that** one air opening (7), in particular in slot form, is provided in the lower shell (4) covered by the upper shell (3), wherein an air slide is provided with a hook (7') which rests on the upper edge of the lower shell (4).

5. Grilling device, in particular according to one of the preceding claims, **characterized in that** at least the lower shell (4) is pivotally mounted on a frame (2), in particular in two bearing lugs (2') of the frame (2).

6. Grilling device according to claim 5, **characterized in that**
the lower shell (4) and/or upper shell (3) are supported at the bearing lugs (2'), especially clamped under application of a spring package.

7. Grilling device according to one of the preceding claims, **characterized in that** an ash trough (9) is arranged below the heating plane (6) and formed as coal grate having approximately an equal area.

8. Grilling device according to one of the preceding claims, **characterized in that** the ash trough (9) is removable from the lower shell (4).

9. Grilling device according to claim 7 or 8, **characterized in that**
the ash trough (9) below the heating plane (6) is guided in a drawer-like manner and has preferably a striking surface (9').

10. Grilling device according to any one of claims 5 to 9, **characterized in that** at least one storage tray (2a) can be suspended at the bearing lug (2').

11. Grilling device according to one of claims 5 to 10, **characterized in that** the coupling mechanism (8) is centrally fixed at the bearing lug (2'), in particular by a central screw on the pivot axis.

12. Grilling device according to any one of the preceding claims, **characterized in that** a charcoal starter (6') is placed on the heating plane (6) for heating-up.

13. Grilling device according to any one of the preceding claims, **characterized in that** the coupling mechanism (8) is to be actuated by a separate operating element, especially by a lever or knob outside of the lower shell (4).

## Revendications

1. Appareil à griller, notamment barbecue en boule, comprenant une coque inférieure (4) dans laquelle sont disposés un plan de chauffe (6) et une grille (5), l'écart vertical entre la grille et le plan de chauffe étant variable et l'écart entre la grille (5) et le plan de chauffe (6) pouvant être réglé par le biais d'un engrenage d'accouplement (8) qui est notamment disposé à l'intérieur de la coque inférieure (4), **caractérisé en ce que** l'engrenage d'accouplement (8) peut être positionné avec pivotement de la coque inférieure (4).

2. Appareil à griller selon la revendication 1, **caractérisé en ce que** l'engrenage d'accouplement (8) est réalisé sous la forme d'une tringlerie, notamment en forme de parallélogramme ou de ciseaux.

3. Appareil à griller selon la revendication 1 ou 2, **caractérisé en ce qu'**il existe au moins une ouverture d'aération (7) dans la zone du fond de la coque inférieure (4), notamment en forme de fente.

4. Appareil à griller selon l'une des revendications précédentes, **caractérisé en ce qu'**il existe une ouverture d'aération (7), notamment en forme de fente, dans une coque supérieure (3) qui recouvre la coque inférieure (4), un papillon à air muni d'un crochet (7') étant de préférence présent, lequel repose sur le bord supérieur de la coque inférieure (4).

5. Appareil à griller selon l'une des revendications précédentes, **caractérisé en ce qu'**au moins la coque inférieure (4) est montée pivotante sur un bâti (2), notamment dans deux oeillets de palier (2') du bâti (2).

6. Appareil à griller selon la revendication 5, **caractérisé en ce que** la coque inférieure (4) et/ou la coque supérieure (3) sont montées serrées aux oeillets de palier (2'), notamment sous la charge d'un groupe de ressorts.

7. Appareil à griller selon l'une des revendications précédentes, **caractérisé en ce qu'**une cuvette à cendres (9) de surface approximativement égale est disposée sous le plan de chauffe (6) réalisé sous la forme d'une grille foyère.

8. Appareil à griller selon l'une des revendications précédentes, **caractérisé en ce que** la cuvette à cendres (9) est montée de manière à pouvoir être extraite de la coque inférieure (4).

9. Appareil à griller selon la revendication 7 ou 8, **caractérisé en ce que** la cuvette à cendres (9) est guidée sous le plan de chauffe (6) à la manière d'un tiroir et possède de préférence une surface d'allumage (9').

10. Appareil à griller selon l'une des revendications 5 à 9, **caractérisé en ce qu'**une tablette (2a) peut être accrochée à au moins un oeillet de palier (2').

11. Appareil à griller selon l'une des revendications 5 à 10, **caractérisé en ce que** l'engrenage d'accouplement (8) est fixé de manière centrale aux oeillets de palier (2'), notamment avec une vis centrale au niveau de l'axe de pivotement.

12. Appareil à griller selon l'une des revendications précédentes, **caractérisé en ce qu'**un allume-charbon (6') peut être posé sur le plan de chauffe (6) pour le préchauffage.

13. Appareil à griller selon l'une des revendications précédentes, **caractérisé en ce que** l'engrenage d'accouplement (8) peut être actionné par le biais d'un élément d'actionnement séparé, notamment par un levier ou un bouton en-dehors de la coque inférieure (4).
